# EUROPEAN PATENT APPLICATION

(11) **EP 4 819 618 A1**
(43) Date of publication of application: **07.10.2026**
(21) Application number: 24896137.7
(22) Date of filing: 29.10.2024
(51) Int. Cl.: H04N 21/4402, H04N 21/2187, H04N 21/431

(54) **LIVE STREAMING VIDEO GENERATION METHOD AND APPARATUS, DEVICE AND STORAGE MEDIUM**

(30) Priority: 30.11.2023 CN 202311636186
(71) Applicant: BEIJING YOUZHUJU NETWORK TECHNOLOGY CO. LTD., Beijing 101299 (CN)
(72) Inventor: FU, Qiang, Beijing 100028 (CN); WANG, Yingguan, Beijing 100028 (CN); HU, Jiali, Beijing 100028 (CN)
(74) Representative: Grünecker Patent- und Rechtsanwälte PartG mbB
(86) International application number: PCT/CN2024/128150
(87) International publication number: WO 2025/113046

(57) **Abstract**

According to embodiments of the disclosure, a method, an apparatus, a device and a storage medium for generating live streaming video are provided. The method includes: obtaining a first live streaming video segment from live streaming content of a live streaming room in accordance with that a live streaming explanation state of a first object corresponding to the live streaming room is detected to be an explaining state, the first live streaming video segment comprising content related to the first object in the live streaming content; and generating a first media content in accordance with that the first live streaming video segment satisfies a recommendation condition, the first media content comprising at least the first live streaming video segment. Therefore, the live streaming video segment corresponding to an explanation object may be automatically generated in a live streaming process.

## Description

This application claims the benefit of Chinese Patent Application No. 202311636186.5, entitled "Method, Apparatus, Device and Storage Medium for Generating Live Streaming Video," filed on November 30, 2023, the entire content of which is incorporated herein by reference.

### FIELD

Example embodiments of the present disclosure generally relate to the field of computers, and in particular, to methods, apparatuses, devices and computer-readable storage media for generating live streaming video.

### BACKGROUND

Currently, more and more platforms (e.g., applications, websites, and so on) are designed to provide various services to users. For example, a user may post, browse, and view various types of multimedia content (e.g., videos) in a platform. The user may also perform or watch live streaming in the platform, for example. Live streaming content may include content related to at least one object (e.g., explanation content for the at least one object).

### SUMMARY

In a first aspect of the present disclosure, a method for generating live streaming video is provided. The method includes: obtaining a first live streaming video segment from live streaming content of a live streaming room in accordance with that a live streaming explanation state of a first object corresponding to the live streaming room is detected to be an explaining state, the first live streaming video segment including content related to the first object in the live streaming content; and generating a first media content in accordance with that the first live streaming video segment satisfies a recommendation condition, the first media content at least including the first live streaming video segment.

In a second aspect of the present disclosure, an apparatus for generating live streaming video is provided. The apparatus includes a video segment obtaining module configured to obtain a first live streaming video segment from live streaming content of a live streaming room in accordance with that a live streaming state of a first object corresponding to the live streaming room is detected to be an explaining state, the first live streaming video segment including content related to the first object in the live streaming content; and a media content generation module configured to generate first media content in accordance with that the first live streaming video segment satisfies a recommendation condition, the first media content at least including the first live streaming video segment.

In a third aspect of the present disclosure, an electronic device is provided. The device includes at least one processing unit; and at least one memory coupled to the at least one processing unit and storing instructions for execution by the at least one processing unit. The instructions, when executed by the at least one processing unit, cause the device to perform the method of the first aspect.

In a fourth aspect of the present disclosure, a computer-readable storage medium is provided. The computer-readable storage medium has stored thereon a computer program executable by a processor to implement the method of the first aspect.

In a fifth aspect of the present disclosure, a computer program product is provided, including computer program instructions that, when executed by a processor, implement the image processing method as described above.

It should be understood that the content described in this section is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent with reference to the following detailed description, taken in conjunction with the accompanying drawings. In the drawings, the same or similar reference numerals refer to the same or similar elements, in which:
FIG. 1 illustrates a schematic diagram of an example environment in which embodiments of the present disclosure can be implemented;
FIGS. 2A to 2D illustrate schematic diagrams of example pages for live streaming video segment management according to some embodiments of the present disclosure;
FIGS. 3A to 3C illustrate schematic diagrams of example pages according to some embodiments of the present disclosure;
FIG. 4A illustrates a schematic diagram of an example of a content recommendation page according to some embodiments of the present disclosure;
FIG. 4B illustrates a schematic diagram of an example of a live streaming page according to some embodiments of the present disclosure;
FIG. 5 illustrates a flowchart of an example process for generating live streaming video according to some embodiments of the present disclosure;
FIG. 6 illustrates a schematic structural block diagram of an apparatus for generating live streaming video according to some embodiments of the present disclosure; and
FIG. 7 illustrates a block diagram of an electronic device capable of implementing various embodiments of the present disclosure.

### DETAILED DESCRIPTION

Embodiments of the present disclosure will be described in more detail below with reference to the accompanying drawings. While certain embodiments of the present disclosure are shown in the accompanying drawings, it should be understood that the present disclosure may be implemented in various forms, and should not be construed as limited to the embodiments set forth herein, but rather, these embodiments are provided for a more thorough and complete understanding of the present disclosure. It should be understood that the drawings and embodiments of the present disclosure are for illustrative purposes only and are not intended to limit the scope of the present disclosure.

In the description of the embodiments of the present disclosure, the terms "comprising/including" and the like should be understood to be open-ended, that is, "comprising/including but not limited to". The term "based on" should be understood as "based at least in part on". The terms "an embodiment" or "the embodiment" should be understood as "at least one embodiment". The term "some embodiments" should be understood as "at least some embodiments". Other explicit and implicit definitions may also be included below.

Herein, unless explicitly stated, performing a step "in response to A" does not mean that this step is performed immediately after "A", but there may be one or more intermediate steps.

It can be understood that the data involved in the technical solution (including but not limited to the data itself, the acquiring or use of the data) should follow the requirements of the corresponding laws and related regulations.

It can be understood that, before the technical solutions disclosed in the embodiments of the present disclosure are used, the types, the usage scope, the usage scenario and the like of personal information related to the present disclosure should be notified to a user and the authorization of the user should be obtained in an appropriate manner according to the relevant laws and regulations.

For example, in response to receiving an active request from a user, prompt information is sent to the user to explicitly prompt the user that the requested operation will need to obtain and use personal information of the user, so that the user may autonomously select whether to provide personal information to software or hardware, such as an electronic device, an application program, a server or a storage medium, which performs the operation of the technical solution of the present disclosure, according to the prompt information.

As an optional but non-limiting implementation, in response to receiving an active request of the user, the prompt information may be sent to the user for example in a pop-up window manner in which the prompt information may be presented in a text manner. In addition, the pop-up window may further carry a selection control for the user to select "agree" or "not agree" to provide personal information to the electronic device.

It may be understood that the foregoing processes of notification and obtaining user authorization are merely illustrative, and do not constitute a limitation on implementations of the present disclosure, and other ways satisfying related laws and regulations may also be applied to implementations of the present disclosure.

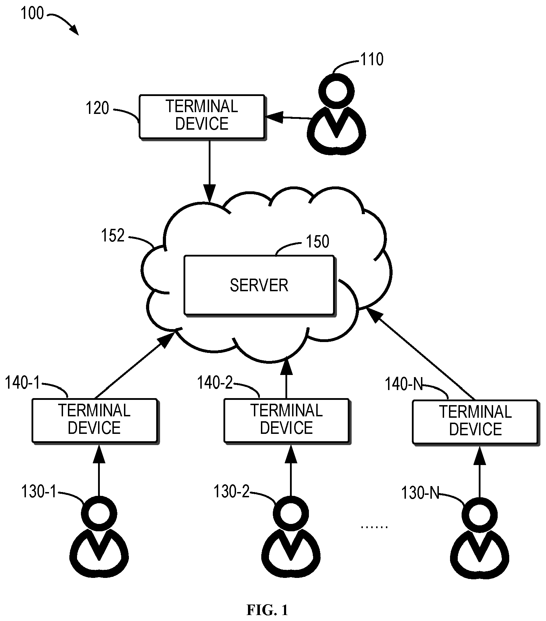

FIG. 1 illustrates a schematic diagram of an example environment 100 in which embodiments of the present disclosure can be implemented. In the environment 100, the user 110 may create and post various types of multimedia content through an associated terminal device 120. The user 110 may also establish a live streaming room through the associated terminal device 120 and provide live streaming content. In some scenarios, the user 110, for example, is also referred to as a poster of the live streaming content and/or a streamer, a live streaming party, or a manager of the live streaming room.

One or more users 130-1, 130-2,···, 130-N may view the multimedia content posted by the user 110 through terminal devices 140-1, 140-2,···, 140-N associated with each other, or view the live streaming of the user 110 and participate in the interaction of the live streaming room, and the like. For ease of discussion, the users 130-1, 130-2, ..., 130-N may be collectively or individually referred to as users 130, and the terminal devices 140-1, 140-2, ..., 140-N may be collectively or individually referred to as the terminal devices 140. In some scenarios, the user 130 may also be referred to as a viewer, an audience, or a participant of the multimedia content/live streaming room.

It should be understood that although only a single streamer is shown in FIG. 1, in some embodiments, multiple streamers may initiate live streaming in a certain live streaming room.

In some embodiments, the terminal device 120 and the terminal device 140 may be respectively installed with an application capable of providing multimedia services, or may access a website capable of providing multimedia services. The multimedia service may include, for example, a live streaming service. The user 110 and the user 130 may operate the terminal device 120 and the terminal device 140 to access a corresponding application or website.

Correspondingly, the terminal device 120 and the terminal device 140 may present corresponding various pages, for example, a content browsing page, a content recommendation page, a live streaming page, and the like. For example, the live streaming page may provide live streaming content of a live streaming room, for example, audio live streaming content or live streaming video content and the like.

In some embodiments, the terminal device 120 and the terminal device 140 may also communicate with a server 150 through a network 152, to enable provisioning of multimedia services. The server 150 may provide functions such as management, configuration, and maintenance of applications or websites. It should be noted that the terminal device 120 may also present the multimedia content posted by other users based on the operation of the user 110, or alternatively, view the live streaming of other users and participate in the interaction of the live streaming room, and the like. The terminal device 140 may also post various types of multimedia content based on the operation of the user 130, or establish a live streaming room and provide the live streaming content. In the following, the operations described with reference to the terminal device 120 may be similarly implemented on the terminal device 140, and the operations described with reference to the terminal device 140 may also be similarly implemented on the terminal device 120.

The terminal device 120 and the terminal device 140 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a television receiver, a radio broadcast receiver, an e-book device, a gaming device, or any combination of the foregoing, including accessories of these devices and peripherals, or any combination thereof. In some embodiments, the terminal devices 120 and 140 can also support any type of interface for a user (such as a "wearable" circuit, and the like). The server 150 may be various types of computing systems/servers capable of providing computing power, including, but not limited to, mainframes, edge computing nodes, computing devices in a cloud environment, and the like.

It should be understood that the structures and functions of the various elements in the environment 100 are described for illustrative purposes only and do not imply any limitation to the scope of the present disclosure.

As briefly mentioned above, a user may post, browse, and view various types of multimedia content in a platform. The user may also view the playback of live streaming or live streaming content in the platform, for example. Conventionally, for a viewer browsing the live streaming, the terminal device may present a live streaming video segment for a certain object in a page of the application in response to an operation of the user only in a case that the user browses the live streaming content in the live streaming room. In addition, when the viewer has not entered the live streaming room, the terminal device can only present preview content about the live streaming room on the content recommendation page of the viewer, and cannot present the live streaming content in the live streaming room. This would affect the promotion of the live streaming room.

According to an embodiment of the present disclosure, an improved solution for generating live streaming videos is provided. In this solution, if a live streaming explanation state of a first object corresponding to the live streaming room is detected to be an explaining state, a first live streaming video segment is obtained from the live streaming content of the live streaming room, the first live streaming video segment including content related to the first object in the live streaming content. If the first live streaming video segment satisfies a recommendation condition, first media content is generated, the first media content at least including the first live streaming video segment.

Therefore, the live streaming video segment of the explanation object may be automatically distributed to the user in real-time in the live streaming process, the user interested in the live streaming content may be attracted to join the live streaming room, and the access effect of the live streaming room may be improved.

Example embodiments of the present disclosure are described below with reference to the accompanying drawings.

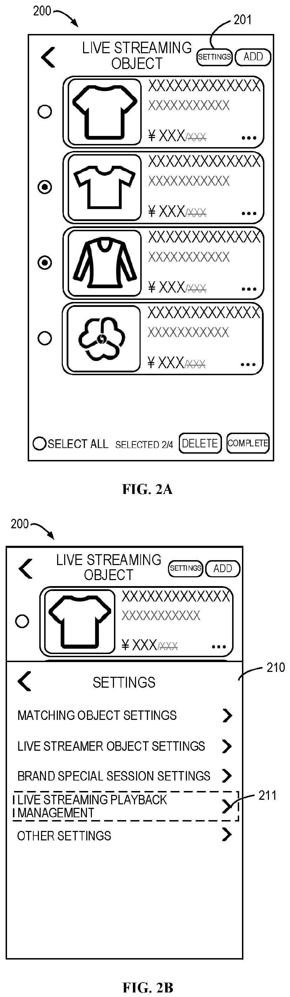

For ease of understanding, some examples are first described in connection with the example pages of FIGS. 2A to 4B. It should be understood that the pages shown in the drawings are merely examples, and various page designs may actually exist. Individual graphical elements in a page may have different arrangements and different visual representations, one or more of which may be omitted or replaced, and one or more other elements may also exist. Embodiments of the present disclosure are not limited in this respect. Example embodiments are described below with reference to the environment of FIG. 1. The pages shown in FIGS. 2A to 4B may be presented by the terminal device 110.

It should be noted that herein, the operations performed by the terminal device (e.g., the terminal device 120 and/or the terminal device 140) may be specifically performed by means of a related application installed locally. In some embodiments, certain operations may need to be done with support of a server (e.g., the server 150) or other devices. For ease of understanding, the example description is made taking the terminal device itself performing an operation as an example.

For the streamer (e.g., the user 110), the terminal device (e.g., the terminal device 120) corresponding to the streamer may obtain the first live streaming video segment from the live streaming content of the live streaming room. In an embodiment of the present disclosure, the terminal device 120 obtains the first live streaming video segment from the live streaming content of the live streaming room in response to the detection of the live streaming explanation state of the first object corresponding to the live streaming room being the explaining state. For example, the live streaming explanation state may include an unexplained state, an explaining state, an explanation end state, or the like. The present disclosure does not limit to a specific live streaming explanation state. If the live streaming explanation state of the first object corresponding to the live streaming room is detected to be the explaining state, the terminal device 120 may determine that the first object is currently being explained in the live streaming room.

The first live streaming video segment includes content related to the first object in the live streaming content. The first live streaming video segment may include, for example, a video segment. In some embodiments, the first live streaming video segment may include explanation content of the first object in the entire live streaming content. Herein, the first object and a second object to be mentioned later refer to objects for which an introduction, description or other related information is given on a page of the application. The object may refer to a physical object, a virtual object, and the like, including but not limited to a physical product, a virtual product, a service, and the like.

With respect to the specific manner of obtaining the first live streaming video segment, in some embodiments, the terminal device 120 may initiate obtaining of the live streaming content of the live streaming room in response to a detection of the live streaming explanation state of the first object being in the explaining state. The terminal device 120 may further determine the obtaining live streaming content as the first live streaming video segment in response to a detection of the live streaming explanation state of the first object being the explanation end state.

For example, during the live streaming room is in a live streaming state, the terminal device 120 may record a live streaming video segment from the live streaming content in response to a detection of a start of the explanation of the first object (that is, the live streaming explanation state of the first object is the explaining state), and obtain the recorded live streaming video segment as the first live streaming video segment in response to a detection of the end of the explanation of the first object (that is, the live streaming explanation state of the first object is the explanation end state). In this case, in some embodiments, during the live streaming room is in the live streaming state, the terminal device 120 may, for example, present an explanation control in association with each object in the live streaming room. The terminal device 120 may determine that the start of the explanation for the first object is detected in response to a detection of a trigger (including but not limited to a click operation, a long-press operation, a double-click operation, a swipe operation, and the like) of the first explanation control for the first object.

For example, the live streaming explanation state of a certain object may also be determined by automatically analyzing the live streaming content. In some embodiments, the terminal device 120 may, for example, in response to a detection of a trigger on the explanation control corresponding to a second object in the live streaming room, determine that the end of the explanation of the first object (that is, the live streaming explanation state of the first object is the explanation end state) and the start of the explanation of another object are detected. For example, the terminal device 120 may further present an explanation end control during the explanation of the first object. The terminal device 120 may determine that the end of the explanation of the first object is detected in response to receiving the trigger for the explanation end control. The present disclosure does not limit the specific manner in which the detection of the start and end of the explanation is performed.

In some embodiments, during the live streaming room is in the live streaming state, the terminal device 120 may record a live streaming video segment from the live content in response to a detection of the start of the explanation of the first object (that is, the live streaming explanation state of the first object is the explaining state), and obtain the recorded live streaming video segment as the first live streaming video segment in response to a detection of a duration of the obtained live streaming content reaching a preset duration. The preset duration herein may be a duration preset by the streamer (e.g., the user 110) of the live streaming room, a duration preset by a background worker of the application 120, or a duration automatically determined by the terminal device 120, and the like. For example, in a case where the preset duration is 1 minute, the terminal device 120 may obtain the recorded live streaming video segment as the first live streaming video segment in response to a detection of the obtained duration of the live streaming content reaching 1 minute.

In some embodiments, before obtaining the first live streaming video segment from the live streaming content of the live streaming room, the terminal device 120 may also determine whether the permission to obtain the live streaming video segment of the live streaming room is enabled. The permission of the live streaming video segment may include, for example, obtaining a live streaming video segment of the live streaming content and pushing a permission. If the permission to obtain the live streaming video segment of the live streaming room is determined to be enabled, the terminal device 120 may obtain the first live streaming video segment from the live streaming content of the live streaming room. For example, the user 110 may set the permission of the live streaming room (the permission of the live streaming room may include a plurality of permissions, and the plurality of permissions include the permission of the live streaming video segment) before the live streaming starts and/or while the live streaming is ongoing. For example, before the live streaming starts, the user 110 may set permissions of the live streaming room by triggering a setting control in a page (e.g., a product management page) used for object management. While the live streaming is ongoing, the user 110 may set the permissions of the live streaming room by triggering the setting control in a page (e.g., a product list page) used for object presentation. The terminal device 120 may determine the permission of the live streaming room based on the setting of the user.

As shown in FIG. 2A to FIG. 2D, before the live streaming starts, the terminal device 120 may present the page 200 shown in FIG. 2A, and the page 200 may be, for example, a product management page. The page 200 includes a setting control 201. The terminal device 120 may present the page 200 as shown in FIG. 2B in response to receiving a trigger for the setting control 201. A setting page 210 is presented in the page 200 shown in FIG. 2B. The setting page 210 presents a plurality of entries for setting the permissions of the live streaming room.

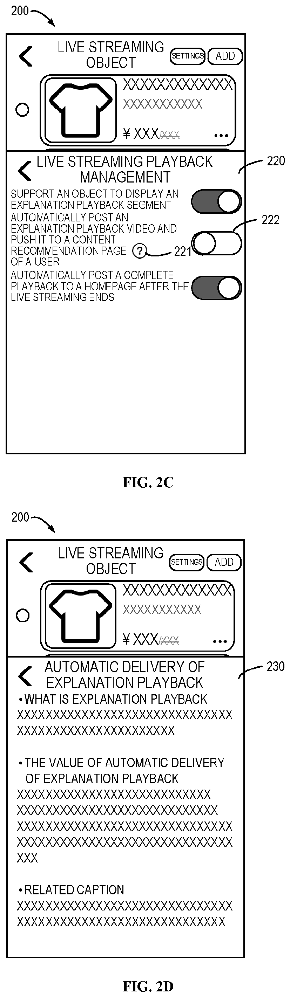

The terminal device 120 may present the page 200 as shown in FIG. 2C in response to receiving a trigger on an entry (e.g., an entry 211) for setting the permission of the live streaming video segment. A page 220 for setting the permission of the live streaming video segment is presented in the page 200 shown in FIG. 2C. The permission of the live streaming video segment may also include a plurality of permissions (e.g., a recording permission for the live streaming video segment, a posting permission for the live streaming video segment, a playback permission for the live streaming video segment, and the like). The page 220 may provide an on/off control for multiple permissions of the live streaming video segment (e.g., including an on/off control 222 for setting recording permissions and posting permissions for live streaming video segments). For example, the terminal device 120 may determine whether the permission to obtain the live streaming video segment of the live streaming room is enabled in response to receiving a trigger on the on/off control 222. For example, the terminal device 120 may determine that permission to obtain the live streaming video segment of the live streaming room is enabled in response to receiving an on operation for the on/off control 222. The terminal device 120 may further obtain the first live streaming video segment from the live streaming content of the live streaming room.

For example, the terminal device 120 may also present a detail control in association with at least one of the plurality of operation controls. The terminal device 120 may switch to a detail description page presenting the permission/operation control corresponding to the detail control in response to receiving the trigger on the detail control. For example, as shown in FIG. 2C, the terminal device 120 may present a detail control 221 in association with the description information of the on/off control 222 (the description information of each on/off control may, for example, indicate its corresponding permission). The terminal device 120 may switch to presenting the page 200 shown in FIG. 2D in response to receiving a trigger for the detail control 221. The page 200 shown in FIG. 2D includes a detail description page 230 of the on/off control 222. The detail description page 230 may, for example, present detailed description information of the on/off control 222 (e.g., detailed description information of its corresponding permission).

After obtaining the first live streaming video segment corresponding to the first object from the live streaming content, the terminal device 120 may determine whether the first live streaming video segment satisfies a recommendation condition, and generate the first media content in a case that the first live streaming video segment satisfies the recommendation condition. The first media content at least includes the first live streaming video segment. Any user browsing the first media content may access the live streaming room of the user 110 by triggering the viewing entry. In some embodiments, the first media content may also include text content. For example, the text content may be determined based on content in the first live streaming video segment and/or preset text content. In some embodiments, the preset text content may be preset by a related user (e.g., a streamer of the live streaming room, a background worker of a live streaming application, and the like), or may be automatically determined by the terminal device 120 based on historical data and the like. For example, the preset text content may include a name of a streamer, or a topic that is preset by the streamer, and the like.

In some embodiments, the recommendation condition may include a relatedness of the first live streaming video segment and the first object satisfying a preset relatedness threshold. The preset relatedness threshold herein may be preset by a related user (e.g., the streamer of the live streaming room, a background worker of a live streaming application, and the like), or may be automatically determined by the terminal device 120 based on historical data and the like. For example, the terminal device 120 may determine the relatedness of the first live streaming video segment and the first object based on a predetermined rule or by means of a model. The terminal device 120 may then compare the determined relatedness with the preset relatedness threshold, to determine whether the relatedness of the first live streaming video segment and the first object satisfies the preset relatedness threshold. For example, the terminal device 120 may determine that the relatedness of the first live streaming video segment and the first object satisfies the preset relatedness threshold in response to the relatedness of the first live streaming video segment and the first object being greater than the preset relatedness threshold. The terminal device 120 may then determine that the first live streaming video segment satisfies the recommendation condition, and generate the first media content based at least on the first live streaming video segment. In this way, the media content may be generated based on a live streaming video segment that is strongly related to the explained object.

In some embodiments, the recommendation condition may further include one or more of the following: a duration of the first live streaming video segment satisfying a preset duration threshold, a content quality of the first live streaming video segment satisfying a preset quality threshold, or the number of posted live streaming video segments related to the first object in the live streaming room not exceeding a preset number threshold. Similarly, the preset duration threshold, the preset quality threshold, the preset number threshold, and the like herein may be preset by a related user (e.g., the streamer of the live streaming room, the background worker of the live streaming application, and the like), or may be automatically determined by the terminal device 120 based on historical data and the like.

For example, the terminal device 120 may also determine the content quality of the first live streaming video segment based on a predetermined rule or by means of a model. The terminal device 120 may further compare the determined content quality of the first live streaming video segment with the preset quality threshold, to determine whether the content quality of the first live streaming video segment satisfies the preset quality threshold. For example, the terminal device 120 may determine that the content quality of the first live streaming video segment satisfies the preset quality threshold in response to the content quality of the first live streaming video segment being greater than the preset quality threshold. In this way, the media content may be generated based on live streaming video segments with higher explanation quality or value.

The terminal device 120 may also directly obtain the duration of the first live streaming video segment. For example, the terminal device 120 may compare the duration of the first live streaming video segment with a preset duration threshold to determine whether the duration of the first live streaming video segment satisfies the preset duration threshold. For example, the terminal device 120 may determine that the duration of the first live streaming video segment satisfies the preset duration threshold in response to the duration of the first live streaming video segment being greater than the preset duration threshold. In this way, the media content may be generated based on a live streaming video segment with an appropriate explanation duration. In some embodiments, the preset duration threshold may also include a first threshold and a second threshold, the first threshold indicating a lower duration limit used to constrain the live streaming video segment, and the second threshold indicating an upper duration limit used to constrain the live streaming video segment. In this case, the terminal device 120 may determine that the duration of the first live streaming video segment satisfies the preset duration threshold in response to the duration of the first live streaming video segment being between the first threshold and the second threshold (e.g., greater than the first threshold and less than the second threshold). In this way, the generation of media content based on video segments which are too long or too short may be avoided, so as not to affect the content quality of the generated media content.

In some embodiments, the terminal device 120 may also directly determine the number of posted live streaming video segments related to the first object in the live streaming room. For example, the recommendation condition may be configured to allow the live streaming video segments related to the same object to be pushed one or several times (a certain preset value) for a specific live streaming room. That is, one or several pieces of media content are generated for the same object. In this way, if the live streaming content of the live streaming video segment including the first object has been previously generated, the first media content may no longer be generated based on the currently obtained first live streaming video segment. Of course, the preset number threshold for the same object may be configured according to actual application requirements, which is not limited in the embodiments of the present disclosure.

In some embodiments, during the live streaming room is in the live streaming state (that is, the live streaming room is in the live streaming state), the terminal device 120 may further post the first media content, so as to display the first media content in a content recommendation page of at least one user. In some embodiments, the first media content is posted as content associated with a streamer (e.g., the user 110) of the live streaming room. For example, the first media content may be posted as content authored by the user 110.

It should be noted that the first object described above is any one of a plurality of objects corresponding to the live streaming room. The terminal device 120 may obtain a live streaming video segment associated with any object from live streaming content of the live streaming room during the live streaming room is in the live streaming state, and post the media content including the live streaming video segment and the viewing entry corresponding to the live streaming room on the content recommendation page of at least one user. In some embodiments, the corresponding media content is posted on the content recommendation page only if the live streaming video segment is determined to be satisfying the corresponding recommendation condition. For example, in some embodiments, the terminal device 120 may further obtain a second live streaming video segment from live streaming content of the live streaming room, and the second live streaming video segment includes content related to the second object in the live streaming content. For example, the terminal device 120 may generate the second media content of the second live streaming video segment in response to determining that the second live streaming video segment satisfies the recommendation condition. The terminal device 120 may further post the second media content to the content recommendation page of the at least one user during the live streaming room is in the live streaming state. The second media content may also include a viewing entry corresponding to the live streaming room, so as to access the live streaming room. Here, the at least one user to which the second media content is posted and the at least one user to which the first media content is posted may include different users. That is, during the live streaming room is in the live streaming state, the terminal device 120 may obtain any number of live streaming video segments associated with the object, and post the obtained at least one live streaming video segment to the content recommendation pages of different users.

In some embodiments, in response to a detection of the live streaming room being in the live streaming end state (that is, the live streaming of the live streaming room ends), the terminal device 120 may stop posting the first media content. In this case, the first media content including the first live streaming video segment is not displayed on the recommendation page of a user. A posting operation (i.e., a posting operation for the first media content) for the first live streaming video segment is performed during the live streaming room is in the live streaming state.

Regarding a specific manner of determining whether the live streaming room is in the live streaming end state, in some embodiments, the terminal device 120 may determine that the live streaming room is in the live streaming end state in response to the live streaming room being stopped. In some embodiments, the terminal device 120 may further determine whether the live streaming room is in the live streaming end state based on an attribute value of the first object. The attribute value of the first object herein may be, for example, a price of the first object. The terminal device 120 may detect the price of the first object in real time, and determine that the live streaming room is in the live streaming end state in a case that the current price of the first object is higher than the price of the first object in the first live streaming video segment. It may be understood that the terminal device 120 may further determine, by using any appropriate policy, whether the live streaming room is in the live streaming end state, and the present disclosure does not limit the specific judgment manner.

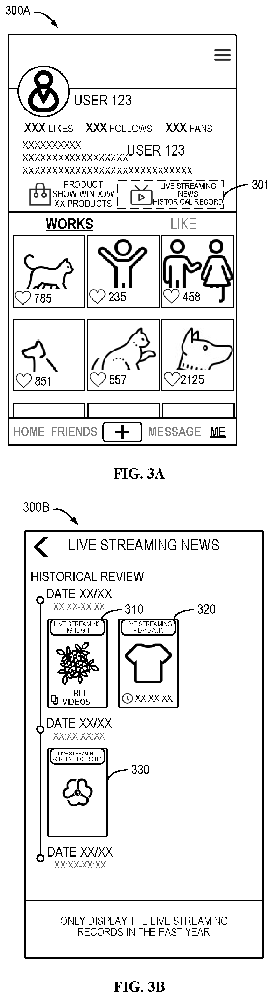

In some embodiments, the terminal device 120 may further present the first media content including the first live streaming video segment in a live content aggregation page of the user 110. As shown in FIG. 3A and FIG. 3B, the terminal device 120 may further present a homepage(e.g., the page 300A) of the user 110. The page 300A may be presented with an entry 301 of the live content aggregation page. The terminal device 120 may present the page 300B shown in FIG. 3B in response to a detection of a trigger for the entry 301. The page 300B is the live content aggregation page of the user 110. At least one media content associated with the live streaming room (e.g., media content 310, media content 320, media content 330) of the user 110 may be presented in the page 300B. Each of the at least one media content may include a live streaming video segment associated with a certain object. For example, page 300B may present the first media content that includes the first live streaming video segment. After the first media content is posted, regardless of the live streaming room is in the live streaming state or in the live streaming end state, the streamer may always view the posted media content from the live streaming content aggregation page.

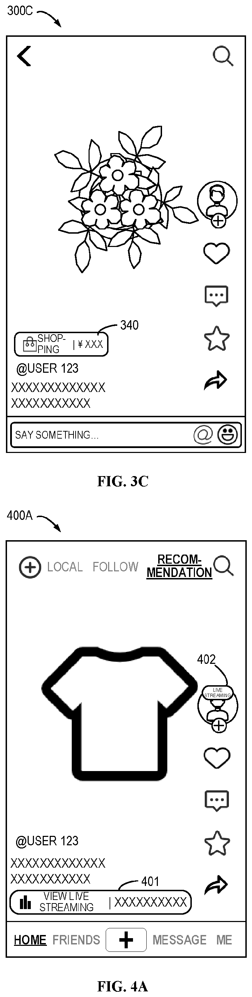

In the live streaming content aggregation page, the terminal device 120 may, for example, switch to a browsing page presenting the media content in response to receiving a trigger of the user 110 for a certain media content related to the live streaming content. For example, the terminal device 120 may switch to a browsing page 300C presenting the media content 310 shown in FIG. 3C in response to receiving a trigger for the media content 310. The browsing page 300C may be presented with a viewing entry 340 of an object corresponding to the media content 310. For example, the terminal device 120 may switch to a details page presenting the object, for example, in response to a detection of a trigger for the viewing entry 340.

The above describes the provision of live streaming video segments on the streamer side and related embodiments. Correspondingly, in an embodiment of the present disclosure, for a viewer user (e.g., the user 130), the terminal device (e.g., the terminal device 140) corresponding to the viewer user obtains a first live streaming video segment of live streaming content in the live streaming room during the live streaming room is in the live streaming state , the first live streaming video segment including content related to the first object in the live streaming content. The first live streaming video segment may include, for example, a video segment. In some embodiments, the first live streaming video segment may include explanation content of the first object in the entire live streaming content. The first live streaming video segment may be, for example, sent by a server (e.g., the server 150) to the terminal device 140. After obtaining the first live streaming video segment, the terminal device 140 presents the first media content in the content recommendation page of the user 130, the first media content including the first live streaming video segment. It may be understood that the user 130 herein is any one of the at least one user to which the above terminal device 120 posts. In some embodiments, the first media content is posted as content associated with the streamer (e.g., the user 110) of the live streaming room. For example, the first media content may be posted as content authored by the user 110.

The viewing entry included in the first media content may be any appropriate viewing entry associated with the live streaming room. The viewing entry corresponding to the live streaming room may be used to access a page corresponding to the live streaming room. For example, the viewing entry included in the first media content may be a specific operation control, an avatar of a streamer (e.g., the user 110), or the like. The present disclosure does not limit a specific viewing entry. For example, as shown in FIG. 4A, the terminal device 140 may present the page 400A to the user 130. The page 400A is the content recommendation page of the user 130. The first live streaming video segment of the first object and the viewing entry 401 are presented in the page 400A. The page 400A also presents an avatar 402 of the streamer and at least one operation control for the first media content. The viewing entry 401 and the avatar 402 herein may both be considered as viewing entries for the live streaming room.

As described above, the terminal device of the streamer user only posts the first live streaming video segment to the at least one user during the live streaming room is in the live streaming state. Thus, the terminal device (e.g., the terminal device 140) of a viewer (e.g., the user 130) may present the first media content in the content recommendation page (e.g., the page 400A) of the user 130 only during the live streaming room is in the live streaming state. In this case, the terminal device 140 may jump from the content recommendation page (i.e., the page 400A) to the live streaming page corresponding to the live streaming room in response to a detection of a trigger on the viewing entry (the viewing entry 401 and/or an avatar 402).

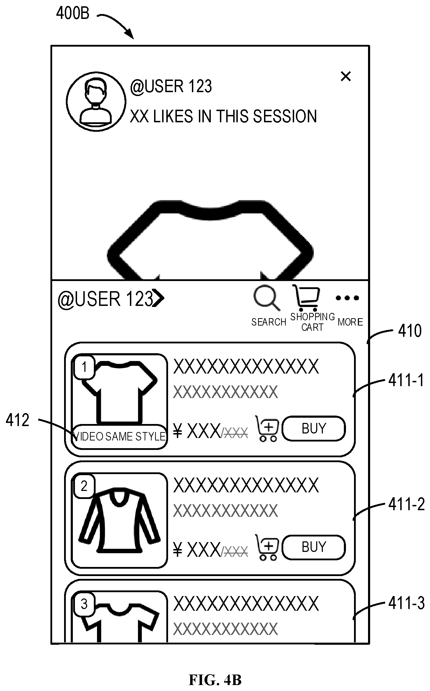

In some embodiments, the terminal device 140 may directly present a live streaming page in response to that the content related to the first object in the live streaming room is live. In some other embodiments, the terminal device 140 may also superimpose an object window and/or a details page of the first object in the live streaming page in response to that the content related to the first object in the live streaming room is not live. The object window herein may include a details page entry of each of the plurality of objects, and the plurality of objects at least includes the first object. For example, as shown in FIG. 4B, the terminal device 140 may jump from the content recommendation page (i.e., the page 400A) to the live streaming page (i.e. the page 400B) corresponding to the live streaming room in response to that the content related to the first object in the live streaming room is not live. The terminal device 400B may present an object window 410 in a superimposed manner. The object window 410 includes a details page entry (e.g., an entry 411-1, an entry 411-2, an entry 411-3, etc.) of each of the plurality of objects. The plurality of objects includes the first object (e.g., an object corresponding to the entry 411-1).

In some embodiments, the terminal device 140 may, in response to a detection of a trigger on the viewing entry for the first media content, present a details page entry (i.e., the entry 411-1) corresponding to the first object in a top manner in the object window of the live streaming page. Alternatively or additionally, in some embodiments, if any object other than the first object is currently being explained in the live streaming room, the terminal device 140 may further present a details page entry corresponding to the object that is currently explained in the object window of the live streaming page, and present a details page entry corresponding to the first object below the details page entry. For example, if any object other than the first object is currently being explained in the live streaming room, the terminal device 140 may present, on a first position of the object window, the details page entry corresponding to the object that is currently being explained, and present, on a second position of the object window, the details page entry corresponding to the first object.

In some embodiments, in order to make the user 130 know the first object conveniently and quickly, the terminal device 140 may also present, in the object window, a preset label (e.g., a label 412) at the details page entry (i.e., the entry 411-1) of the first object. Thereby, the first object in the object window can be more easily noticed by the user through specially marking the details page entry of the first object. Here, the label 412 may always be presented at the detail page entry of the first object, or in response to switching to present the live streaming page, the label 412 is presented at the entry 411-1, and in response to a presentation duration of the label 412 reaching a preset duration, the presentation of the label 412 is canceled.

In some embodiments, when jumping from the first media content of the content recommendation page to the live streaming room, the object window 410 shown in FIG. 4B may not be presented, and the details page of the first object is presented after switching to the live streaming room, for example, at least a part of the details page may be presented in the live streaming room page in a superimposed manner in a similar way as the object window 410. In this way, the user may be directly displayed with the details content of the first object that the user may be more interested in. In some embodiments, alternatively, when accessing the live streaming room from the first media content of the content recommendation page, only the live streaming room page may be presented, which facilitates the user to watch the current live streaming content without presenting object related information in a superimposed manner. The user may trigger a corresponding interaction in the live streaming room page as needed.

The presentation of the first media content including the first live streaming video segment on the viewer side is discussed above. For posting of different live streaming video segments in the same live streaming room, presentation can be performed on the viewer side in a similar manner and a similar interaction manner can be achieved.

In summary, according to the embodiments of the present disclosure, the live streaming video segment corresponding to an explanation object may be automatically generated in a live streaming process. The generated live streaming video segment may be used to automatically delivered to users in real time as needed, which may attract users interested in the live streaming content to join the live streaming room, facilitating to improve the access effect of the live streaming room.

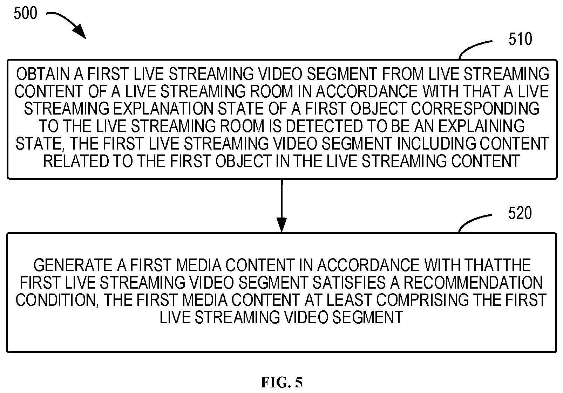

FIG. 5 illustrates a flowchart of an example process 500 for generating live streaming video in accordance with some embodiments of the present disclosure. The process 500 may be implemented at a terminal device (e.g., the terminal device 120) of a streamer. The process 500 is described below with reference to FIG. 1.

In block 510, a terminal device obtains a first live streaming video segment from live streaming content of a live streaming room in accordance with that a live streaming explanation state of a first object corresponding to the live streaming room is detected to be in an explaining state, the first live streaming video segment including content related to the first object in the live streaming content.

In block 520, the terminal device generates a first media content in accordance with that the first live streaming video segment satisfies a recommendation condition, the first media content at least including the first live streaming video segment.

In some embodiments, the process 500 further includes: posting the first media content during a live streaming state of the live streaming room, so as to display the first media content in a content recommendation page of the at least one user.

In some embodiments, the first media content further includes text content, and the text content is determined based on at least one of: content in the first live streaming video segment, and preset text content.

In some embodiments, the recommendation condition includes a relatedness of the first live streaming video segment and the first object satisfying a preset relatedness threshold.

In some embodiments, the recommendation condition further includes at least one of: a duration of the first live streaming video segment satisfying a preset duration threshold, a content quality of the first live streaming video segment satisfying a preset quality threshold, and a number of posted live streaming video segments related to the first object in the live streaming room not exceeding a preset number threshold.

In some embodiments, the obtaining the first live streaming video segment from the live streaming content of the live streaming room includes: initiating obtaining of the live streaming content of the live streaming room in accordance with that the live streaming explanation state of the first object is detected to be the explaining state; and determining the obtained live streaming content as the first live streaming video segment in accordance with that the live streaming explanation state of the first object is detected to be an explanation end state or in accordance with that a duration of the obtained live streaming content is detected to reach a preset duration.

In some embodiments, the obtaining the first live streaming video segment from the live streaming content of the live streaming room includes: determining whether a permission to obtain the live streaming video segment of the live streaming room is enabled; and obtaining the first live streaming video segment from the live streaming content of the live streaming room in accordance with a determination that the permission to obtain the live streaming video segment of the live streaming room is enabled.

In some embodiments, the first object is any of a plurality of objects corresponding to the live streaming room.

In some embodiments, the process 500 further includes: stopping posting the first media content in accordance with that the live streaming room is detected to be in a live streaming end state.

In some embodiments, the process 500 further includes: presenting the first media content in a live streaming content aggregation page of a streamer of the live streaming room.

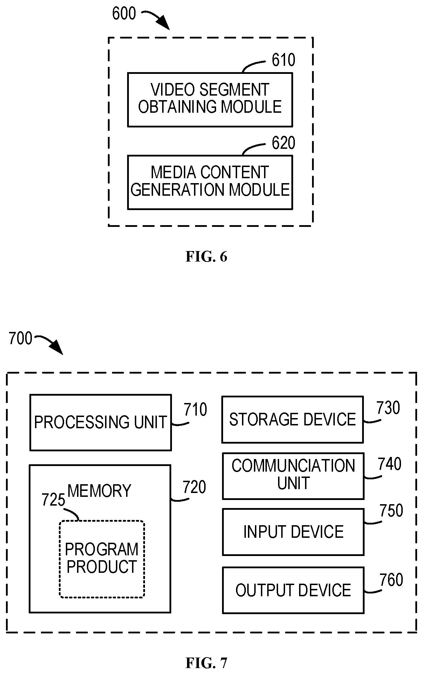

Embodiments of the present disclosure also provide a corresponding apparatus for implementing the above method or process. FIG. 6 illustrates a schematic structural block diagram of an apparatus 600 for generating live streaming video according to some embodiments of the present disclosure. The apparatus 600 may be implemented as or included in a terminal device (e.g., the terminal device 120). The various modules/components in the apparatus 600 may be implemented by hardware, software, firmware, or any combination thereof.

As shown in FIG. 6, an apparatus 600 includes a video segment obtaining module 610 configured to, obtain a first live streaming video segment from live streaming content of a live streaming room in accordance with that a live streaming state of a first object corresponding to the live streaming room is detected to be an explaining state, the first live streaming video segment including content related to the first object in the live streaming content. The apparatus 600 further includes a media content generation module 620 configured to generate first media content in accordance with that the first live streaming video segment satisfies a recommendation condition, the first media content at least including the first live streaming video segment.

In some embodiments, the apparatus 600 further includes: a media content posting module configured to post the first media content during a live streaming state of the live streaming room, so as to display the first media content in a content recommendation page of at least one user.

In some embodiments, the first media content further includes text content, and the text content is determined based on at least one of: content in the first live streaming video segment, or preset text content.

In some embodiments, the recommendation condition includes a relatedness of the first live streaming video segment and the first object satisfying a preset relatedness threshold.

In some embodiments, the recommendation condition further includes at least one of: a duration of the first live streaming video segment satisfying a preset duration threshold, a content quality of the first live streaming video segment satisfying a preset quality threshold, and a number of posted live streaming video segments related to the first object in the live streaming room not exceeding a preset number threshold.

In some embodiments, the video segment obtaining module 610 is further configured to: initiating obtaining of the live streaming content of the live streaming room in accordance with that a live streaming explanation state of the first object is detected to be the explaining state; and determine the obtained live streaming content as the first live streaming video segment in accordance with that the live streaming explanation state of the first object is detected to be an explanation end state or in accordance with that a duration of the obtained live streaming content is detected to reach a preset duration.

In some embodiments, the video segment obtaining module 610 is further configured to determine whether a permission to obtain a live streaming video segment of the live streaming room is enabled; and obtain the first live streaming video segment from the live streaming content of the live streaming room in accordance with a determination that the permission to obtain the live streaming video segment of the live streaming room is enabled.

In some embodiments, the first object is any of a plurality of objects corresponding to the live streaming room.

In some embodiments, the apparatus 600 further includes a posting stopping module configured to stop posting the first media content in accordance with that the live streaming room is detected to be in a live streaming end state.

In some embodiments, the apparatus 600 further includes: a content presentation module configured to present the first media content in a live streaming content aggregation page of a streamer of the live streaming room.

The units and/or modules included in the apparatus 600 may be implemented in various manners, including software, hardware, firmware, or any combination thereof. In some embodiments, one or more units and/or modules may be implemented using software and/or firmware, such as machine-executable instructions stored on a storage medium. In addition to or as an alternative to machine-executable instructions, some or all of the units and/or modules in the apparatus 600 may be implemented, at least in part, by one or more hardware logic components. By way of example and not limitation, example types of hardware logic components that may be used include field programmable gate arrays (FPGA), application specific integrated circuits (ASIC), application specific standards (ASSP), system-on-a-chip (SOC), complex programmable logic devices (CPLD), and the like.

FIG. 7 illustrates a block diagram of an electronic device 700 capable of implementing one or more embodiments of the present disclosure. It should be understood that the electronic device 700 illustrated in FIG. 7 is merely illustrative and should not constitute any limitation on the function and scope of the embodiments described herein. The electronic device 700 shown in FIG. 7 may be used to implement the terminal device 120, the terminal device 140, and/or the server 150 in FIG. 1, or the apparatus 600 in FIG. 6.

As shown in FIG. 7, the electronic device 700 is in the form of a general-purpose electronic device. Components of the electronic device 700 may include, but are not limited to, one or more processors or processing units 710, a memory 720, a storage device 730, one or more communication units 740, one or more input devices 750, and one or more output devices 760. The processing unit 710 may be an actual or virtual processor and capable of performing various processes according to programs stored in the memory 720. In multiprocessor systems, multiple processing units execute computer-executable instructions in parallel to improve parallel processing capabilities of electronic device 700.

The electronic device 700 typically includes a plurality of computer storage media. Such media may be any available media accessible to the electronic device 700, including, but not limited to, volatile and non-volatile media, removable and non-removable media. The memory 720 may be volatile memory (e.g., registers, caches, random access memory (RAM)), non-volatile memory (e.g., read-only memory (ROM), electrically erasable programmable read-only memory (EEPROM), flash memory), or some combination thereof. The storage device 730 may be a removable or non-removable medium and may include a machine-readable medium, such as a flash drive, magnetic disk, or any other medium, which may be capable of storing information and/or data and may be accessed within electronic device 700.

The electronic device 700 may further include additional removable/non-removable, volatile/non-volatile storage media. Although not shown in FIG. 7, a disk drive for reading from or writing to a removable, nonvolatile magnetic disk (e.g., a "floppy disk") and an optical disk drive for reading from or writing to a removable, nonvolatile optical disk may be provided. In these cases, each drive may be connected to a bus (not shown) by one or more data media interfaces. The memory 720 may include a computer program product 725 having one or more program modules configured to perform various methods or actions of various embodiments of the present disclosure.

The communication unit 740 enables communication with another electronic devices through a communication medium. Additionally, the functionality of components of the electronic device 700 may be implemented in a single computing cluster or multiple computing machines capable of communicating over a communication connection. Thus, the electronic device 700 may operate in a networked environment using logical connections with one or more other servers, network personal computers (PCs), or another network node.

The input device 750 may be one or more input devices, for example a mouse, a keyboard, a trackball, or the like. The output device 760 may be one or more output devices, for example a display, a speaker, a printer, or the like. The electronic device 700 may also communicate with one or more external devices (not shown) through the communication unit 740 as needed, the external devices such as storage devices, display devices, etc., communicate with one or more devices that enable a user to interact with the electronic device 700, or communicate with any device (e.g., a network card, a modem, etc.) that enables the electronic device 700 to communicate with one or more other electronic devices. Such communication may be performed via an input/output (I/O) interface (not shown).

According to example implementations of the present disclosure, there is provided a computer-readable storage medium having computer-executable instructions stored thereon, wherein the computer-executable instructions are executed by a processor to implement the method described above. According to example implementations of the present disclosure, a computer program product is further provided, the computer program product being tangibly stored on a non-transitory computer-readable medium and including computer-executable instructions, the computer-executable instructions being executed by a processor to implement the method described above.

Aspects of the present disclosure are described herein with reference to flowcharts and/or block diagrams of methods, apparatuses, devices, and computer program products implemented in accordance with the present disclosure. It should be understood that each block of the flowchart and/or block diagram, and combinations of blocks in the flowcharts and/or block diagrams, may be implemented by computer readable program instructions.

These computer-readable program instructions may be provided to a processing unit of a general purpose computer, special purpose computer, or other programmable data processing apparatus to produce a machine, such that the instructions, when executed by the processing unit of a computer or other programmable data processing apparatus, produce means to implement the functions/acts specified in the flowchart and/or block diagram. These computer-readable program instructions may also be stored in a computer-readable storage medium, these instructions cause the computer, programmable data processing apparatus, and/or other devices to function in a particular manner, such that the computer-readable medium storing instructions includes an article of manufacture including instructions to implement aspects of the functions/acts specified in the flowchart and/or block diagram(s).

The computer-readable program instructions may be loaded onto a computer, other programmable data processing apparatus, or other apparatus, such that a series of operational steps are performed on a computer, other programmable data processing apparatus, or other apparatus to produce a computer-implemented process, such that the instructions executed on the computer, other programmable data processing apparatus, or other apparatus implement the functions/acts specified in the one or more blocks in the flowchart and/or block diagram.

The flowchart and block diagrams in the drawings show the architecture, function, and operation of possible implementations of systems, methods, and computer program products according to various implementations of the present disclosure. In this regard, each block in the flowchart or block diagram may represent a module, program segment, or a part of an instruction, which includes one or more executable instructions for implementing the specified logical function. In some alternative implementations, the functions noted in the blocks may also occur in a different order than noted in the drawings. For example, two consecutive blocks may actually be performed substantially in parallel, which may sometimes be performed in the reverse order, depending on the function involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations of the present disclosure have been described above, which are illustrative, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A method for generating a live streaming video, comprising:
obtaining a first live streaming video segment from live streaming content of a live streaming room in accordance with that a live streaming explanation state of a first object corresponding to the live streaming room is detected to be an explaining state, the first live streaming video segment comprising content related to the first object in the live streaming content; and
generating a first media content in accordance with that the first live streaming video segment satisfies a recommendation condition, the first media content at least comprising the first live streaming video segment.

2. The method of claim 1, further comprising:
posting the first media content during a live streaming state of the live streaming room, so as to display the first media content in a content recommendation page of at least one user, wherein the first media content further comprises a viewing entry corresponding to the live streaming room.

3. The method of claim 1, wherein the first media content further comprises text content, and the text content is determined based on at least one of: content in the first live streaming video segment, or preset text content.

4. The method of any one of claims 1 to 3, wherein the recommendation condition comprises a relatedness of the first live streaming video segment and the first object satisfying a preset relatedness threshold;
wherein the recommendation condition further comprises at least one of:
a duration of the first live streaming video segment satisfying a preset duration threshold,
a content quality of the first live streaming video segment satisfying a preset quality threshold,
a number of posted live streaming video segments related to the first object in the live streaming room not exceeding a preset number threshold.

5. The method of any one of claims 1 to 4, wherein obtaining the first live streaming video segment from the live streaming content of the live streaming room comprises:
initiating obtaining of the live streaming content of the live streaming room in accordance with that the live streaming explanation state of the first object is detected to be the explaining state; and
determining the obtained live streaming content as the first live streaming video segment in accordance with that the live streaming explanation state of the first object is detected to be an explanation end state or in accordance with that a duration of the obtained live streaming content is detected to reach a preset duration.

6. The method of any one of claims 1 to 5, wherein obtaining the first live streaming video segment from the live streaming content of the live streaming room comprises:
determining whether a permission to obtain a live streaming video segment of the live streaming room is enabled; and
obtaining the first live streaming video segment from the live streaming content of the live streaming room in accrodance with a determination that the permission to obtain the live streaming video segment of the live streaming room is enabled.

7. The method of any one of claims 1 to 6, wherein the first object is any of a plurality of objects corresponding to the live streaming room; and/or
wherien the method further comprises: presenting the first media content in a live streaming content aggregation page of a streamer of the live streaming room.

8. The method of claim 2, further comprising:
stopping posting the first media content in accordance with that the live streaming room is detected to be in a live streaming end state.

9. An apparatus for generating a live streaming video, comprising:
a video segment obtaining module configured to obtain a first live streaming video segment from live streaming content of a live streaming room in accordance with that a live streaming state of a first object corresponding to the live streaming room is detected to be an explaining state, the first live streaming video segment comprising content related to the first object in the live streaming content; and
a media content generation module configured to generate first media content in accordance with thatthe first live streaming video segment satisfies a recommendation condition, the first media content at least comprising the first live streaming video segment.

10. An electronic device comprising:
at least one processing unit; and
at least one memory coupled to the at least one processing unit and storing instructions for execution by the at least one processing unit, the instructions, when executed by the at least one processing unit, causing the electronic device to perform the method of any one of claims 1 to 8.

11. A computer-readable storage medium having stored thereon a computer program executable by a processor to implement the method of any one of claims 1 to 8.

12. A computer program product comprising computer executable instructions, wherein the computer executable instructions, when executed by a processor, implement the method of any one of claims 1 to 8.
